# EUROPÄISCHE PATENTANMELDUNG

(11) **EP 4 746 381 A1**
(43) Veröffentlichungstag der Anmeldung: **20.05.2026**
(21) Anmeldenummer: 25212897.0
(22) Anmeldetag: 03.11.2025
(51) Int. Cl.: H04L 67/12, H04L 67/52, H04W 4/02

(54) **VERFAHREN ZUR KOMMUNIKATION ZWISCHEN EINER MATERIALVERARBEITUNGSEINRICHTUNG UND EINEM MOBILGERÄT UND VERFAHREN ZUR ÜBERMITTLUNG EINES ANLAGENZUSTANDS UND/ODER EINER MELDUNG BETREFFEND EINEN ANLAGENZUSTAND EINER MATERIALVERARBEITUNGSEINRICHTUNG AN EIN MOBILGERÄT**

(30) Priorität: 15.11.2024 DE 102024133450
(71) Anmelder: KLEEMANN GMBH, 73037 Göppingen (DE)
(72) Erfinder: Bräuninger, Lukus, 71384 Weinstadt (DE)
(74) Vertreter: Herrmann, Jochen

(57) **Zusammenfassung**

Die Erfindung betrifft ein Verfahren zur Kommunikation zwischen einer Materialverarbeitungseinrichtung und einem Mobilgerät und ein Verfahren zur Übermittlung eines Anlagenzustands und/oder einer Meldung betreffend einen Anlagenzustand einer Materialverarbeitungseinrichtung an ein Mobilgerät. Eine vereinfachte und weniger fehleranfällige Verbindung zwischen der Materialverarbeitungseinrichtung und dem Mobilgerät wird dadurch erreicht, dass auf Basis von Standortinformationen der Materialverarbeitungseinrichtung und des Mobilgeräts die Verfügbarkeit einer drahtlosen Verbindung ermittelt wird. Ein verbessertes Verfahren zur Übermittlung eines Anlagenzustands und/oder einer Meldung betreffend einen Anlagenzustand einer Materialverarbeitungseinrichtung an ein Mobilgerät wird bereitgestellt, indem der Anlagenzustand und/oder die Meldung betreffend den Anlagenzustand über eine drahtlose Verbindung an das Mobilgerät und/oder über eine weitere drahtlose Verbindung an eine externe Datenverarbeitungseinrichtung übermittelt wird.

## Beschreibung

Die Erfindung betrifft ein Verfahren zur Kommunikation zwischen einer Materialverarbeitungseinrichtung und einem Mobilgerät und ein Verfahren zur Übermittlung eines Anlagenzustands und/oder einer Meldung betreffend einen Anlagenzustand einer Materialverarbeitungseinrichtung an ein Mobilgerät.

Aus DE 10 2022 118 039 B3 ist eine Materialverarbeitungseinrichtung in Form einer Gesteinsverarbeitungseinrichtung mit einem Prallbrecher, einem Vorsieb und einem Nachsieb bekannt. Die Gesteinsverarbeitungseinrichtung dient der Zerkleinerung und größenmäßigen Sortierung von Gesteinsmaterial. Verarbeitetes Material wird nach Größe sortiert auf verschiedenen Halden aufgeschüttet und verhaldet. Die Gesteinsverarbeitungseinrichtung weist eine Steuervorrichtung auf, die für einen Datenaustausch mit einem Datenspeicher verbunden ist. Ferner sind eine Eingabevorrichtung zur Eingabe sowie eine Ausgabevorrichtung zur Ausgabe von Informationen vorgesehen. Die Ausgabevorrichtung steht ferner zum Empfang und zur Übertragung von Daten in Funkkommunikation mit einer Empfangsvorrichtung. Die Steuervorrichtung ermittelt verschiedene Informationen, zum Beispiel wann die nächste Aufgabe von zu verarbeitendem Material auf die Aufgabeeinheit der Gesteinsverarbeitungseinrichtung erfolgen soll oder wann eine Halde von verarbeitetem Material das nächste Mal abgeräumt werden soll. Die jeweilige Information wird an eine mobile Empfangsvorrichtung versendet, die einem Maschinenführer beispielsweise eines Baggers zur Aufgabe von Material oder eines Radladers zum Abräumen der Halde zur Verfügung steht. Bei der mobilen Empfangsvorrichtung kann es sich beispielsweise um ein Mobiltelefon handeln.

Unter Verwendung aus dem Stand der Technik bekannter Verfahren zur Kommunikation zwischen Materialverarbeitungseinrichtungen und Mobilgeräten ergeben sich Schwierigkeiten insbesondere dann, wenn ein Mobilgerät zur Kommunikation mit mehr als einer Materialverarbeitungseinrichtung genutzt wird. In einem solchen Fall wird beispielsweise das Mobilgerät jeweils versuchen, eine Verbindung mit der zuletzt verbundenen Materialverarbeitungseinrichtung herzustellen, auch wenn eine Verbindung eventuell nicht verfügbar ist, insbesondere wenn sich die Materialverarbeitungseinrichtung weit entfernt, beispielsweise auf einer anderen Baustelle befindet. Es kann auch sein, dass das Mobilgerät nicht direkt einen Verbindungsversuch mit der zuletzt verbundenen Materialverarbeitungseinrichtung unternimmt, sondern stattdessen dem Nutzer eine Auswahl von Verbindungen zu Materialverarbeitungseinrichtungen zur Verfügung stellt, mit denen das Mobilgerät bereits verbunden war. Insbesondere bei Mobilgeräten, die bereits mit einer Vielzahl von Materialverarbeitungseinrichtungen verbunden waren, wie typischerweise Mobilgeräte von Kunden, die mehrere Anlagen betreiben oder von Servicetechnikern, kann demnach eine lange Liste von bisherigen Verbindungen vorliegen, die eine Auswahl der gewünschten Materialverarbeitungseinrichtung umständlich und fehleranfällig macht.

Auch hinsichtlich der Übermittlung eines Anlagenzustands und/oder einer Meldung betreffend einen Anlagenzustand einer Materialverarbeitungseinrichtung an ein Mobilgerät ergeben sich aus dem Stand der Technik Nachteile. So kann vorgesehen sein, dass Meldungen betreffend den Anlagenzustand an alle Mobilgeräte übermittelt werden, die zuvor mit der Materialverarbeitungseinrichtung verbunden waren. Somit erhalten auch Mobilgeräte Meldungen, die sich weit entfernt von der Materialverarbeitungseinrichtung befinden und für deren Nutzer die übermittelte Meldung somit keine Relevanz hat. Beispielsweise kann sich ein Maschinenführer mit einem Mobilgerät weit entfernt von der Materialverarbeitungseinrichtung befinden und somit nicht für die Ausführung eines Abräumauftrags oder dergleichen in Frage kommen. Andererseits ist teilweise vorgesehen, dass Meldungen über den Anlagenzustand nur an Mobilgeräte übermittelt werden, die unmittelbar mit der Materialverarbeitungseinrichtung verbunden sind, beispielsweise über eine drahtlose Verbindung wie ein WLAN-Netzwerk der Materialverarbeitungseinrichtung. Wenn sich ein Mobilgerät nun außerhalb der Reichweite einer solchen Verbindung befindet, kann die Meldung nicht oder nicht vollständig an das Mobilgerät übermittelt werden, insbesondere auch obwohl der Nutzer des Mobilgeräts für die Ausführung eines Abräumauftrags oder dergleichen in Frage kommen würde, da er sich beispielsweise auf der gleichen Baustelle befindet wie die Materialverarbeitungseinrichtung.

Es ist Aufgabe der Erfindung, ein Verfahren zur Kommunikation zwischen einer Materialverarbeitungseinrichtung und einem Mobilgerät bereitzustellen, das sich durch eine vereinfachte und weniger fehleranfällige Herstellung einer drahtlosen Verbindung zwischen der Materialverarbeitungseinrichtung und dem Mobilgerät auszeichnet.

Es ist weiterhin Aufgabe der Erfindung, ein verbessertes Verfahren zur Übermittlung eines Anlagenzustands und/oder einer Meldung betreffend einen Anlagenzustand einer Materialverarbeitungseinrichtung an ein Mobilgerät bereitzustellen.

Die erstgenannte Aufgabe wird durch ein Verfahren gemäß Anspruch 1 gelöst. Demnach ist es vorgesehen, dass eine gespeicherte Standortinformation der Materialverarbeitungseinrichtung aus einem Speicher des Mobilgeräts und/oder einer Speichereinrichtung einer externen Datenverarbeitungseinrichtung abgerufen wird und dass eine Standortinformation des Mobilgeräts ermittelt wird.

Die gespeicherte Standortinformation kann beispielsweise im Rahmen einer vorherigen Verbindung, insbesondere einer vorherigen drahtlosen Verbindung, von der Materialverarbeitungseinrichtung an das Mobilgerät übermittelt worden sein. Weiter ist denkbar, dass die Standortinformation daraufhin durch das Mobilgerät an die externe Datenverarbeitungseinrichtung übermittelt worden ist. Es ist auch vorstellbar, dass die Materialverarbeitungseinrichtung ihre Standortinformation zuvor an die externe Datenverarbeitungseinrichtung übermittelt hatte und/oder dass die Standortinformation von der externen Datenverarbeitungseinrichtung auf das Mobilgerät übertragen wurde.

Die gespeicherte Standortinformation kann dabei beispielsweise eine Information darüber sein, auf welcher Baustelle und/oder in welchem Bereich der Baustelle die Materialverarbeitungseinrichtung bzw. das Mobilgerät sich befindet. Denkbar ist auch, dass eine Adresse des Standorts der Materialverarbeitungseinrichtung bzw. des Mobilgeräts ermittelt wird. Auch eine Standortinformation, die eine Form von Koordinaten beinhaltet, beispielsweise bezüglich eines globalen oder lokalen Koordinatensystems ist denkbar. Vorzugsweise kann die Standortinformation geographische Koordinaten beinhalten oder diesen entsprechen.

Weiter ist vorgesehen, dass zumindest teilweise auf Basis der Standortinformation des Mobilgeräts und der gespeicherten Standortinformation der Materialverarbeitungseinrichtung eine Verfügbarkeit einer drahtlosen Verbindung zwischen der Materialverarbeitungseinrichtung und dem Mobilgerät ermittelt wird. Beispielsweise kann eine Ermittlung auf Basis der Standortinformationen beinhalten, dass ermittelt wird, in welchem Abstand die potenziellen Verbindungspartner sich zueinander befinden. Insbesondere kann ein geringer Abstand zu dem Ermittlungsergebnis führen, dass eine drahtlose Verbindung verfügbar ist, ein großer Abstand zu dem Ergebnis, dass keine drahtlose Verbindung verfügbar ist.

Das erfindungsgemäße Verfahren sieht ferner vor, dass bei gegebener Verfügbarkeit die drahtlose Verbindung hergestellt wird. Beispielsweise kann die Verbindungsherstellung automatisch erfolgen, wenn die Verfügbarkeit der drahtlosen Verbindung ermittelt wurde. Denkbar ist auch eine manuelle Herstellung der drahtlosen Verbindung, wenn die Verfügbarkeit ermittelt wurde.

Wenn vorgesehen ist, dass nach der Herstellung der drahtlosen Verbindung eine aktuelle Standortinformation der Materialverarbeitungseinrichtung von der Materialverarbeitungseinrichtung über die drahtlose Verbindung an das Mobilgerät übermittelt wird und in einem Speicher des Mobilgeräts gespeichert wird, kann ein erneuter Verbindungsaufbau zwischen der Materialverarbeitungseinrichtung und dem Mobilgerät erleichtert werden. Beispielsweise kann bei einer erstmaligen Verbindung zwischen einem Mobilgerät und einer Materialverarbeitungseinrichtung, mit der das Mobilgerät zuvor noch nicht verbunden war, die Materialverarbeitungseinrichtung ihre aktuelle Standortinformation an das Mobilgerät übermitteln. Die erstmalige Verbindung kann beispielsweise nach dem Verfahren gemäß Anspruch 1 hergestellt werden oder alternativ durch ein abweichendes Verfahren, insbesondere durch einen manuellen Verbindungsaufbau, beispielsweise durch Eingabe von Verbindungsdaten wie einer Kennung der drahtlosen Verbindung und eines Kennworts oder dergleichen. Das Mobilgerät speichert die Standortinformation der Materialverarbeitungseinrichtung und kann auf diese zurückgreifen, wenn eine erneute Verbindung zu dieser Materialverarbeitungseinrichtung aufgebaut werden soll. Vorzugsweise kann bei dieser erneuten Verbindung die Materialverarbeitungseinrichtung wiederum ihre aktuelle Standortinformation an das Mobilgerät übertragen. Das Mobilgerät kann diese Standortinformation dann wiederum speichern bzw. die bei der erstmaligen Verbindung oder einer vorherigen Verbindung gespeicherte Standortinformation aktualisieren. Auf Basis der in dem Speicher des Mobilgeräts gespeicherten Standortinformation der Materialverarbeitungseinrichtung und der Standortinformation des Mobilgeräts kann dann die Verfügbarkeit der drahtlosen Verbindung ermittelt werden.

In diesem Zusammenhang kann vorteilhaft auch vorgesehen sein, dass die aktuelle Standortinformation der Materialverarbeitungseinrichtung von dem Mobilgerät über eine zweite drahtlose Verbindung an die externe Datenverarbeitungseinrichtung übermittelt wird. Die aktuelle Standortinformation kann dann in der Speichereinrichtung der externen Datenverarbeitungseinrichtung gespeichert werden. Auf diese Weise kann eine aktuelle Standortinformation der Materialverarbeitungseinrichtung über die externe Datenverarbeitungseinrichtung auch für weitere Mobilgeräte abrufbar zur Verfügung stehen. Dies kann insbesondere vorteilhaft sein, wenn sich die Standortinformation der Materialverarbeitungseinrichtung seit einer erstmaligen Verbindung oder einer vorherigen Verbindung geändert hat, beispielsweise weil der Standort der Materialverarbeitungseinrichtung sich geändert hat. Denkbar ist hierbei, dass in der Zwischenzeit ein anderes Mobilgerät, beispielsweise eines anderen Nutzers, mit der Materialverarbeitungseinrichtung verbunden war und eine aktuellere Standortinformation der Materialverarbeitungseinrichtung an die externe Datenverarbeitungseinrichtung übermittelt hat. Die Ermittlung der Verfügbarkeit der drahtlosen Verbindung kann somit eine aktualisierte Standortinformation der Materialverarbeitungseinrichtung berücksichtigten. In diesem Sinne kann die Standortinformation der Materialverarbeitungseinrichtung laufend aktualisiert werden, insbesondere jedes Mal, wenn das Mobilgerät oder ein anderes Mobilgerät mit der Materialverarbeitungseinrichtung in Verbindung steht.

Alternativ oder zusätzlich wird gemäß einer vorteilhaften Weiterbildung der Erfindung vorgeschlagen, dass die aktuelle Standortinformation der Materialverarbeitungseinrichtung von der Materialverarbeitungseinrichtung über eine dritte drahtlose Verbindung an die externe Datenverarbeitungseinrichtung übermittelt wird. Die Standortinformation kann dann in der Speichereinrichtung der externen Datenverarbeitungseinrichtung gespeichert werden. Mit anderen Worten kann die Materialverarbeitungseinrichtung somit auf direktem Weg ihre Standortinformation der externen Datenverarbeitungseinrichtung mitteilen, sodass diese für das Mobilgerät oder andere Mobilgeräte zur Verfügung stehen kann. Denkbar ist hierbei insbesondere, dass die Materialverarbeitungseinrichtung ihre aktuelle Standortinformation zwecks Aktualisierung der in der Speichereinrichtung gespeicherten Standortinformation in regelmäßigen oder unregelmäßigen Zeitabständen, bei Ereignissen wie einer Veränderung des Standorts, und/oder kontinuierlich an die externe Datenverarbeitungseinrichtung übermittelt.

Gemäß einer vorteilhaften Weiterbildung der Erfindung wird vorgeschlagen, dass die Ermittlung der aktuellen Standortinformation der Materialverarbeitungseinrichtung durch die Materialverarbeitungseinrichtung vorgenommen wird. Hierzu kann die Materialverarbeitungseinrichtung insbesondere einen Standortsensor aufweisen. Bevorzugt kann die Standortermittlung mittels eines globalen Navigationssatellitensystems, insbesondere mittels GPS, GLONASS, Beidou oder Galileo erfolgen.

Alternativ oder zusätzlich kann vorgesehen sein, dass die Ermittlung der Standortinformation des Mobilgeräts durch das Mobilgerät vorgenommen wird. Hierzu kann das Mobilgerät insbesondere einen Standortsensor aufweisen. Bevorzugt kann die Standortermittlung mittels eines globalen Navigationssatellitensystems, insbesondere mittels GPS erfolgen. Vorteilhaft weisen handelsüblich verfügbare Mobilgeräte bereits häufig Standortsensoren, insbesondere GPS-Sensoren auf.

Es kann vorgesehen sein, dass das Mobilgerät die gespeicherte Standortinformation der Materialverarbeitungseinrichtung über die zweite drahtlose Verbindung von der externen Datenverarbeitungseinrichtung abruft.

Die Verfügbarkeit einer drahtlosen Verbindung zwischen dem Mobilgerät und der Materialverarbeitungseinrichtung kann auf einfache und zuverlässige Weise ermittelt werden, wenn hierbei ein geografischer Abstand zwischen dem Mobilgerät und der Materialverarbeitungseinrichtung berücksichtigt wird. Beispielsweise kann aufgrund der gespeicherten Standortinformation der Materialverarbeitungseinrichtung und der Standortinformation des Mobilgeräts der geografische Abstand, beispielsweise in einer Längeneinheit wie Metern, ermittelt werden. Die Ermittlung des geografischen Abstands kann beispielsweise durch das Mobilgerät und/oder die externe Datenverarbeitungseinrichtung durchgeführt werden. Es kann insbesondere vorgesehen sein, dass die Ermittlung der Verfügbarkeit zu dem Ergebnis führt, dass eine drahtlose Verbindung verfügbar ist, wenn der geografische Abstand zwischen der Materialverarbeitungseinrichtung und dem Mobilgerät kleiner ist als ein vorgegebener geografischer Abstand. Der vorgegebene geografische Abstand kann beispielsweise einen Wert betragen wie 100 m, 50 m oder 20 m. Denkbar ist, dass der vorgegebene geografische Abstand eine Reichweite der drahtlosen Verbindung berücksichtigt, beispielsweise unter Berücksichtigung einer Sende- und/oder Empfangsleistung der Materialverarbeitungseinrichtung und/oder des Mobilgeräts bezüglich der drahtlosen Verbindung.

Die letztgenannte Aufgabe wird durch ein Verfahren gemäß Anspruch 8 gelöst. Demnach ist es vorgesehen, dass ein Anlagenzustand der Materialverarbeitungseinrichtung ermittelt wird. Wenn eine drahtlose Verbindung zwischen der Materialverarbeitungseinrichtung und dem Mobilgerät besteht, wird der Anlagenzustand und/oder eine Meldung betreffend den Anlagenzustand über die drahtlose Verbindung an das Mobilgerät gesendet. Alternativ oder zusätzlich ist vorgesehen, dass der Anlagenzustand und/oder die Meldung betreffend den Anlagenzustand an eine externe Datenverarbeitungseinrichtung übermittelt wird. Dies kann insbesondere vorgesehen sein, wenn eine drahtlose Verbindung zwischen der Materialverarbeitungseinrichtung und dem Mobilgerät nicht besteht. Bei der Übermittlung über die drahtlose Verbindung kann sich aufgrund einer Reichweite der drahtlosen Verbindung bereits eine sinnvolle Zuordnung zu dem Mobilgerät ergeben, da somit ein Mobilgerät, das sich in der Nähe der Materialverarbeitungseinrichtung befindet, Informationen über den Anlagenzustand erhält. Die Übermittlung des Anlagenzustands und/oder der Meldung betreffend den Anlagenzustand an die externe Datenverarbeitungseinrichtung bietet den Vorteil, dass die Informationen über den Anlagenzustand nicht nur lokal begrenzt auf die Reichweite der drahtlosen Verbindung vorliegen. Denkbar ist insbesondere, dass die Informationen von der externen Datenverarbeitungseinrichtung abrufbar, insbesondere für das Mobilgerät abrufbar, zur Verfügung gestellt werden. Weiterhin kann es möglich sein, dass die Informationen von der externen Datenverarbeitungseinrichtung aktiv an das Mobilgerät gesendet werden.

Gemäß einer bevorzugten Ausgestaltung der Erfindung kann vorgesehen sein, dass der Anlagenzustand einen Messwert zumindest eines Sensors der Materialverarbeitungseinrichtung umfasst oder von dem Messwert abhängt. Insbesondere kann der Messwert ein Messwert eines Haldensensors sein. Der Haldensensor kann zur Ermittlung eines Materialstands einer Halde dienen. Die Halde kann beispielsweise eine Halde für bereits von der Materialverarbeitungseinrichtung verarbeitetes Material sein und/oder auch eine Halde für von der Materialverarbeitungseinrichtung zu verarbeitendes Material. Der Messwert kann auch ein Messwert eines Fördereinrichtungs-Sensors sein. Der Fördereinrichtungs-Sensor kann zur Ermittlung eines an der Materialverarbeitungseinrichtung geförderten Stroms an Material dienen. Das geförderte Material kann zu verarbeitendes Material umfassen. Auch ein Austragsband-Sensor zur Ermittlung eines an der Materialverarbeitungseinrichtung geförderten Stroms verarbeiteten Materials kann vorgesehen sein. Denkbar ist ferner, dass ein Messwert eines Aufgabematerial-Sensors ermittelt wird. Der Aufgabematerial-Sensor kann zur Ermittlung einer Information über Material dienen, das einer Aufgabeeinheit der Materialverarbeitungseinrichtung zur Verarbeitung zugeführt wurde. Auch kann der Messwert ein Messwert eines Füllstands-Sensors sein. Der Füllstands-Sensor kann zur Ermittlung eines Füllstands einer Brechanlage und/oder einer Siebanlage der Materialverarbeitungseinrichtung dienen. Ferner kann der Messwert ein Messwert eines Brechspalt-Sensors sein, der zur Ermittlung einer aktuellen Spaltbreite eines Brechspalts der Brechanlage dienen kann. Denkbar ist auch, dass ein Betriebsstoff-Sensor vorgesehen ist, dessen Messwert Aufschluss über einen Vorrat an Betriebsstoffen (z.B. Kraftstoffen, Schmiermittel, Kühlmittel etc.) gibt. Auch ein Ladezustandssensor kann vorgesehen sein, mittels dessen ein Ladezustand eines Energiespeichers ermittelt wird, beispielsweise einer Batterie oder eines Akkus.

Für eine sinnvolle Zuordnung von Informationen bezüglich des Anlagenzustand zu Mobilgeräten kann vorgesehen sein, dass auf Basis einer Standortinformation der Materialverarbeitungseinrichtung und einer Standortinformation des Mobilgeräts ein geografischer Abstand zwischen dem Mobilgerät und der Materialverarbeitungseinrichtung ermittelt wird. Die Standortinformation kann beispielsweise eine in einem Speicher des Mobilgeräts und/oder in einer Speichereinrichtung der externen Datenverarbeitungseinrichtung gespeicherte Standortinformation sein. Der Anlagenzustand und/oder die Meldung betreffend den Anlagenzustand kann dann über eine zweite drahtlose Verbindung von der externen Datenverarbeitungseinrichtung an das Mobilgerät übermittelt werden, wenn der geografische Abstand einen festgelegten Wert unterschreitet. Die Ermittlung des geografischen Abstands kann beispielsweise durch das Mobilgerät und/oder die externe Datenverarbeitungseinrichtung durchgeführt werden. Der festgelegte Wert kann beispielsweise ein Abstand sein, der eine sinnvolle Bearbeitung einer Aufgabe an der Materialverarbeitungseinrichtung, beispielsweise das Abräumen einer Halde oder das Nachfüllen eines Betriebsstoffs, durch den Nutzer des Mobilgeräts ermöglicht. Beispielsweise kann der Abstand weniger sein als 1 km, als 500 m, als 200 m oder weniger.

Gemäß einer bevorzugten Erfindungsvariante wird vorgeschlagen, dass der Anlagenzustand mit einem Soll-Anlagenzustand verglichen wird, und dass die Meldung betreffend den Anlagenzustand eine Warnmeldung ist, die eine Abweichung zwischen dem Anlagenzustand und dem Soll-Anlagenzustand signalisiert. Der Abgleich kann durch die Materialverarbeitungseinrichtung, durch das Mobilgerät und/oder durch die externe Datenverarbeitungseinrichtung vorgenommen werden.

Die Ermittlung des Anlagenzustands, die Übermittlung des Anlagenzustands und/oder der Meldung betreffend den Anlagenzustand an das Mobilgerät und/oder an die externe Datenverarbeitungseinrichtung kann kontinuierlich, in regelmäßigen Abständen oder in unregelmäßigen Abständen erfolgt.

Im Rahmen der Erfindung kann es sich bei der Materialverarbeitungseinrichtung insbesondere um eine Gesteinsverarbeitungseinrichtung handeln. Die Materialverarbeitungseinrichtung kann zumindest eine Brechanlage und/oder eine Siebanlage und/oder eine Fördereinrichtung aufweisen. Vorzugsweise kann die Materialverarbeitungseinrichtung eine mobile Materialverarbeitungseinrichtung sein.

Solche Materialverarbeitungseinrichtungen können beispielsweise zur Zerkleinerung und/oder zum Sortieren von Aufgabematerial, insbesondere von Gesteinsmaterial wie Naturstein, Beton, Ziegeln, oder aber Recyclingmaterial verwendet werden. Das zu bearbeitende Material wird einer Aufgabeeinheit der Materialverarbeitungseinrichtung, beispielsweise in Form eines Trichters, zugeführt und über eine Fördereinrichtung, beispielsweise eine Vibrationsaufgaberinne oder einen Bandförderer einem Brecher und/oder einem Sieb zugeführt. Dem Brecher kann auch eine Vorabsiebung vorgeschaltet sein, beispielsweise um einen Feinanteil oder ein Mittelkorn, welches bereits eine geeignete Korngröße aufweist, an dem Brecher vorbeizuleiten. Die Vorabsiebung kann Teil der Fördereinrichtung sein.

Ferner kann es sich im Rahmen der Erfindung bei dem Mobilgerät um ein Mobiltelefon, einen Tablet-Computer, einen Personal Digital Assistant (PDA), ein Bedieninterface einer Baumaschine wie Bagger oder Radlader und/oder um ein Notebook handeln.

Die drahtlose Verbindung zwischen dem Mobilgerät und der Materialverarbeitungseinrichtung kann im Rahmen der Erfindung insbesondere eine Funkverbindung, beispielsweise eine WLAN-, eine Nearfield-Communication-, eine RFID- und/oder Bluetooth-Verbindung umfassen.

Die zweite drahtlose Verbindung zwischen dem Mobilgerät und der externe Datenverarbeitungseinrichtung kann insbesondere eine Funkverbindung umfassen, vorzugsweise eine Mobilfunkverbindung, beispielsweise eine GSM-, UMTS-, LTE-, 5G- und/oder eine 6G-Verbindung und/oder eine WLAN-Verbindung. Auch kann die dritte drahtlose Verbindung zwischen der Materialverarbeitungseinrichtung und der externe Datenverarbeitungseinrichtung insbesondere eine Funkverbindung umfassen, vorzugsweise eine Mobilfunkverbindung, beispielsweise eine GSM-, UMTS-, LTE-, 5G- und/oder eine 6G-Verbindung und/oder eine WLAN-Verbindung.

Die Erfindung wird im Folgenden anhand von in den Figuren dargestellten Ausführungsbeispielen näher erläutert. Es zeigen
- Figur 1: in einer schematischen teilgeschnittenen Ansicht eine Materialverarbeitungseinrichtung, ein Mobilgerät und eine externe Datenverarbeitungseinrichtung,
- Figur 2: ein Ablaufdiagramm eines beispielhaften Ablaufs einer Kommunikation zwischen der Materialverarbeitungseinrichtung und dem Mobilgerät,
- Figur 3: ein weiteres Ablaufdiagramm eines beispielhaften Ablaufs einer Kommunikation zwischen der Materialverarbeitungseinrichtung, dem Mobilgerät und der externen Datenverarbeitungseinrichtung, und
- Figur 4: ein Ablaufdiagramm eines beispielhaften Ablaufs einer Übermittlung eines Anlagenzustands und/oder einer Meldung betreffend den Anlagenzustand der Materialverarbeitungseinrichtung an das Mobilgerät.

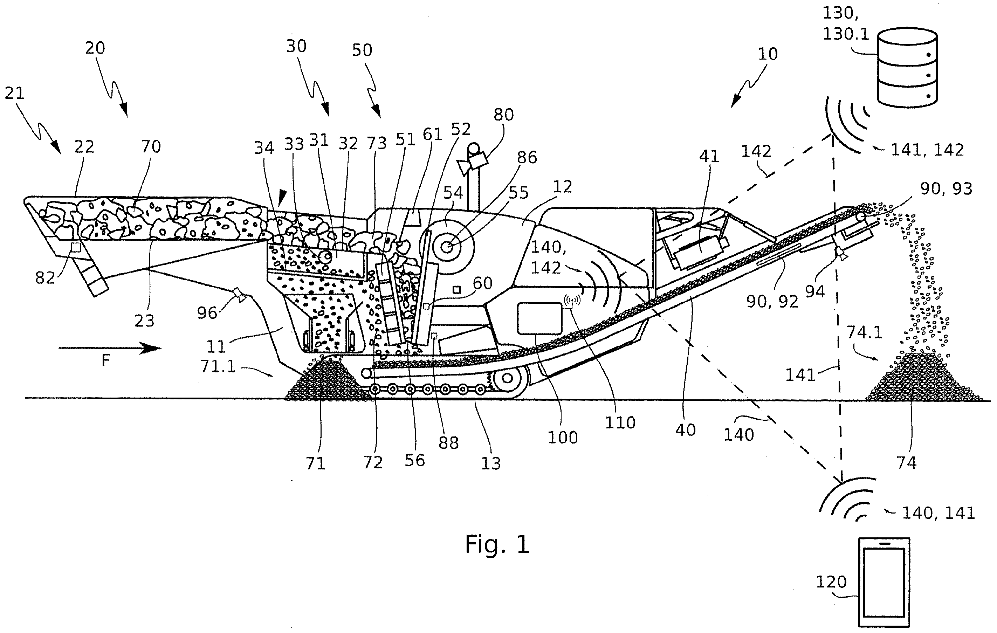

Figur 1 zeigt in einer seitlichen, teilweise geschnittenen schematischen Darstellung eine Materialverarbeitungseinrichtung 10. Die Materialverarbeitungseinrichtung 10 kann als mobile Anlage mit einem Chassis 11 und beispielsweise einem Kettenantrieb 13 ausgebildet sein. Die Materialverarbeitungseinrichtung 10 kann eine Brechanlage 50 und/oder eine Siebanlage 30 und/oder ein Haldenband aufweisen.

An der Materialverarbeitungseinrichtung 10, insbesondere an einer Aufgabeeinheit 20, kann ferner ein Trichter 21 vorgesehen sein, der Trichterwände 22 aufweisen kann. Der Trichter 21 kann dazu dienen, Aufgabematerial 70 von einer vorgeschalteten Förderanlage, beispielsweise einem Bagger, einem Radlader oder einem Band, zu empfangen und auf eine Fördereinrichtung 23 zu leiten.

Der Brechanlage 50 und/oder der Siebanlage 30 kann mittels der Fördereinrichtung 23 Aufgabematerial 70 in einer Förderrichtung F zur Verarbeitung zugeführt werden. Vorliegend ist die Fördereinrichtung 23 als Vibrationsaufgaberinne ausgestaltet. Es sind jedoch auch andere Ausgestaltungen einer Fördereinrichtung 23, insbesondere als Förderband, vorstellbar.

Die Siebanlage 30 kann, beispielsweise als Vorabsiebung, der Brechanlage 50 vorgeschaltet sein. Die Vorabsiebung kann ein Doppeldecker-Schwerstücksieb 31 aufweisen, das ein als gröberes Sieb ausgebildetes Oberdeck 32 und ein als feineres Sieb ausgebildetes Unterdeck 34 aufweisen kann. Es kann von einem Antrieb 33 in Kreisschwingung versetzt werden. Das Oberdeck 32 kann einen Feinanteil 71 und ein Mittelkorn 72 von dem zu brechenden Material 73 trennen. Das Unterdeck 34 kann den Feinanteil 71 von dem Mittelkorn 72 trennen. Der Feinanteil 71 kann wahlweise aus der Materialzerkleinerungsanlage 10 geleitet und auf eine Feinkorn-Halde 71.1 oder beispielsweise durch entsprechende Stellung einer Bypassklappe dem Mittelkorn 72 zugeführt werden. Das Mittelkorn 72 kann über einen Bypass an dem Brecher 50 vorbei zu einem Hauptaustragsband 40 geführt werden. Das zu brechende Material 73 wird am Ende der Vorabsiebung dem Brecher 50 über einen Brechereinlauf zugeführt. Die Vorabsiebung kann Teil der Fördereinrichtung 23 sein.

Die Materialverarbeitungseinrichtung 10 kann eine als Backenbrecher ausgebildete Brechanlage 50 aufweisen. Es ist jedoch auch denkbar, andere Typen von Brechanlage 50 vorzusehen, beispielsweise Prallbrecher, Walzenbrecher oder Kegelbrecher. Die Brechanlage 50 kann eine feste Brechbacke 51 und eine bewegte Brechbacke 52 aufweisen, die schräg aufeinander zulaufend ausgerichtet sein können, sodass zwischen ihnen ein sich verjüngender Schacht ausgebildet ist. Der Schacht kann in einem Brechspalt 56 münden. Die Brechanlage 50 kann, beispielsweise über eine mit einem Exzenter 54 verbundene Antriebswelle 55, von einer Antriebseinheit 12 angetrieben werden.

Durch den Exzenter 54 wird die bewegte Brechbacke 52 in einer elliptischen Bewegung auf die feste Brechbacke 51 zu- und von dieser wegbewegt. Während eines solchen Hubes ändert sich auch der Abstand zwischen den Brechbacken 51, 52. Durch die Bewegung der bewegten Brechbacke 52 wird das zu brechenden Material 73 entlang des Schachtes immer weiter zerkleinert, bis es eine Korngröße erreicht hat, die es ihm ermöglicht, den Schacht durch den Brechspalt 56 zu verlassen. Das zerkleinerte Material 74 fällt auf das Hauptaustragsband 40 und wird über dieses weiter auf eine Hauptaustrags-Halde 74.1 gefördert. Dabei kann es beispielsweise auch vorgesehen sein, dass es an einem Magnetabscheider 41 vorbeigeführt wird, der ferromagnetische Bestandteile von dem zerkleinerten Material 74 trennt und seitlich auswirft.

Wie in Figur 1 weiter zu sehen ist, kann die Materialverarbeitungseinrichtung 10 einen Aufgabematerial-Sensor 80 aufweisen. Der Aufgabematerial-Sensor 80 kann der Ermittlung einer Information über das der Aufgabeeinheit 20 zugeführte Material dienen. Insbesondere kann es sich um eine Information über eine Beschaffenheit des zugeführten Materials handeln, wobei eine Beschaffenheit beispielsweise eine Aufgabegröße und/oder Art des zu bearbeitenden Materials sein kann.

Es ist auch denkbar, dass mehrere Aufgabematerial-Sensoren 80 vorgesehen sind. Wie in dem Ausführungsbeispiel dargestellt, kann es sich bei dem Aufgabematerial-Sensor 80 um eine Kamera handeln. Die Kamera kann ein Objektiv umfassen. Der Aufgabematerial-Sensor 80 oder die Aufgabematerial-Sensoren 80 können mittels einer Sensor-Haltevorrichtung an der Materialverarbeitungseinrichtung 10 gehalten sein. Bei der Sensor-Haltevorrichtung kann es sich um einen Mast handeln, an dem der Aufgabematerial-Sensor 80 oder die Aufgabematerial-Sensoren 80 befestigt ist/sind. Der Aufgabematerial-Sensor 80 kann für sich genommen und/oder in Kombination mit einem Objektiv dazu ausgebildet sein, einen Messbereich im Bereich der Fördereinrichtung 23 zu erfassen.

Während des Betriebs der Materialverarbeitungseinrichtung 10 wird zu bearbeitendes Material auf der Fördereinrichtung 23 in Richtung der Brech- 50 und/oder der Siebanlage 30 gefördert. Hierbei kann das zu bearbeitende Material, das sich im Messbereich des Aufgabematerial-Sensors 80 befindet, überwacht werden. Beispielsweise kann kontinuierlich eine Beschaffenheit des zu bearbeitenden Materials ermittelt werden.

Hierzu nimmt der Aufgabematerial-Sensor 80 bevorzugt Bilder auf, die an eine Steuerungseinrichtung 100 der Materialverarbeitungseinrichtung 10 übermittelt werden können. Die Steuerungseinrichtung 100 kann eine Datenverarbeitungseinrichtung aufweisen, die ausgebildet ist, Bilderkennungsalgorithmen auszuführen, um die Beschaffenheit des Materials aus den Bildern zu bestimmen. Denkbar ist auch die Verwendung von Objekterkennungsalgorithmen.

Besonders bevorzugt ist jedoch, dass zumindest ein künstliches neuronales Netz (KNN) zur Bilderkennung verwendet wird. Insbesondere kann das zumindest eine KNN im Vorfeld mit Datensätzen von Bildern mit bekannter Ausprägung einer Beschaffenheit wie der Aufgabegröße und/oder der Gesteinsart trainiert worden sein. Beispielsweise kann das KNN verschiedene Klassen von Aufgabegrößen erkennen.

Somit kann ermittelt werden, welche Beschaffenheit das Material hat, das in der Folge zu der Brech- 50 und/oder der Siebanlage 30 gelangt.

Wie aus der Figur 1 weiter hervorgeht, kann der Brechanlage 50 ein Füllstandsensor 61 zugeordnet sein. Dieser kann als Ultraschallsensor ausgebildet sein. Es ist jedoch auch denkbar, andere Sensortypen zu verwenden, beispielsweise optische Sensoren (beispielsweise ein Kamerasystem), Radarsensoren oder mechanisch wirkende Sensoren. Der Füllstandsensor 61 kann den Füllstand des Brechers 50 mit zu brechendem Material 73 überwachen.

Ferner kann der Siebanlage 30 ein Füllstandsensor zugeordnet sein (nicht dargestellt). Auch dieser kann als Ultraschallsensor oder in Form eines anderen Sensortyps ausgebildet sein, beispielsweise eines optischen Sensors. Der Füllstandsensor der Siebanlage 30 kann den Füllstand der Siebanlage 30 mit zu siebendem Material überwachen.

Ferner kann vorgesehen sein, dass ein Strom, vorzugsweise ein Volumenstrom des zu bearbeitenden Materials ermittelt wird. Hierzu kann ein Fördereinrichtungs-Sensor 82 vorgesehen sein. Der Fördereinrichtungs-Sensor 82 kann beispielsweise dazu ausgebildet sein, eine Vibrationsamplitude und/oder eine Vibrationsfrequenz der Fördereinrichtung 23 zu ermitteln. Hieraus kann eine Geschwindigkeit des auf der Fördereinrichtung 23 befindlichen zu bearbeitenden Materials ermittelt werden. Denkbar ist auch eine alternative Ausgestaltung des Fördereinrichtungs-Sensors 82, beispielsweise in Form eines Drehzahlsensors im Falle einer als Förderband ausgestalteten Fördereinrichtung 23.

Um einen Volumenstrom zu ermitteln, kann zusätzlich noch die Schichthöhe des zu bearbeitenden Materials auf der Fördereinrichtung 23 ermittelt werden. Hierzu kann beispielsweise der oben beschriebene Aufgabematerial-Sensor 80 oder alternativ ein weiterer Sensor Verwendung finden. Die Schichthöhe kann ebenfalls in mehrere Klassen eingeteilt werden, und mittels eines KNN wie oben beschrieben ausgewertet werden.

Wie ferner in Figur 1 dargestellt, kann die Materialverarbeitungseinrichtung 10 weiter einen Austragsband-Sensor 90 aufweisen, der zur Ermittlung eines Stroms verarbeiteten Materials dient. Wie zuvor erläutert, kann das zerkleinerte Material 74 mittels des Hauptaustragsbands 40 auf die Hauptaustrags-Halde 74.1 gefördert werden. Der Austragsband-Sensor 90 kann eine Bandwaage 92 umfassen, die eine Masse auf dem Hauptaustragsband 40 befindlichen zerkleinerten Materials 74 ermittelt. Ferner kann der Austragsband-Sensor 90 einen Geschwindigkeits-Sensor zur Ermittlung einer Fördergeschwindigkeit des Hauptaustragsbands 40 aufweisen, beispielsweise einen Drehzahlsensor 93 eines Antriebs oder einer Umlenkrolle des Hauptaustragsbands 40. Aus der ermittelten Masse und der Fördergeschwindigkeit kann auf einen geförderten Massenstrom geschlossen werden. Auf Basis des ermittelten Massenstroms ist es beispielsweise möglich, eine Rate des Anwachsens der Hauptaustrags-Halde 74.1 abzuschätzen.

Ein Füllstand der Hauptaustrags-Halde 74.1 kann vorzugsweise durch einen Haldensensor 94 ermittelt werden. Denkbar ist insbesondere, dass der Haldensensor 94, wie vorliegend dargestellt, als Kamera ausgebildet ist. Der Haldensensor 94 kann Bilder der Hauptaustrags-Halde 74.1 aufnehmen, die beispielsweise mittels Methoden der Bildverarbeitung oder Methoden der künstlichen Intelligenz wie beispielsweise mittels der oben bereits angesprochenen KNN ausgewertet werden können, um einen Füllstand der Hauptaustrags-Halde 74.1 zu ermitteln. Die Auswertung kann durch die Datenverarbeitungseinrichtung der Materialverarbeitungseinrichtung 10 vorgenommen werden. Ebenso kann zur Überwachung des Füllstands der Feinkorn-Halde 71.1 ein weiterer Haldensensor 96 vorgesehen sein.

Die Materialverarbeitungseinrichtung 10 kann ferner einen Überlastsensor 60 aufweisen. Mittels des Überlastsensors 60 kann eine Überlastung der Brechanlage 50 ermittelt werden. Eine Überlastung der Brechanlage 50 kann beispielsweise vorliegen, wenn sich nicht brechbares Material innerhalb des Brechraums befindet. Vorzugsweise kann es sich bei dem Überlastsensor 60 um einen Sensor handeln, der eine mechanische Belastung und/oder Verformung einer oder beider der Brechbacken 51, 52 ermitteln kann. Insbesondere kann ein Dehnungsmesssensor zur Erfassung einer Verformung zum Einsatz kommen. Denkbar ist auch, dass der Überlastsensor 60 dazu ausgebildet ist, eine Überlastung anhand einer aktuell an der Antriebseinheit 12 anliegenden Last (Leistung, Drehmoment) zu ermitteln. Beispielsweise kann der Überlastsensor einen Antriebs-Sensor 86 umfassen.

Auch ein Brechspalt-Sensor 88 zur Überwachung einer aktuellen Spaltbreite des Brechspalts 56 kann vorgesehen sein.

Wie aus Figur 1 weiter hervorgeht, kann zwischen der Materialverarbeitungseinrichtung 10 und einem Mobilgerät 120 eine drahtlose Verbindung 140 herstellbar sein. Die drahtlose Verbindung 140 kann vorzugsweise eine WLAN- und/oder Bluetooth-Verbindung sein. Über die drahtlose Verbindung 140 kann eine Kommunikation zwischen der Materialverarbeitungseinrichtung 10 und dem Mobilgerät 120 ermöglicht werden. Auf diese Weise können beispielsweise Informationen über einen Anlagenzustand der Materialverarbeitungseinrichtung 10 an das Mobilgerät 120 übertragen werden. Einem Nutzer des Mobilgeräts 120 kann somit Zugriff auf die Informationen über den Anlagenzustand ermöglicht werden.

Bei dem Anlagenzustand kann es sich beispielsweise um einen Messwert eines oder mehrerer der oben genannten Sensoren, insbesondere eines Haldensensors 94, 96, des Fördereinrichtungs-Sensors 82, des Austragsband-Sensors 90, des Aufgabematerial-Sensors 80, des Überlastsensors 60 und/oder des Füllstands-Sensors 61 handeln. Denkbar ist auch, dass die Materialverarbeitungseinrichtung 10 einen Betriebsstoff-Sensor aufweist, mittels dessen ein Vorrat an Betriebsstoffen (z.B. Kraftstoffen, Schmiermittel, Kühlmittel etc.) ermittelt wird. Der Anlagenzustand kann dann den Vorrat eines oder mehrerer Betriebsstoffe umfassen.

Das Mobilgerät 120 kann, wie vorliegend dargestellt, ein Mobiltelefon sein. Vorzugsweise weist das Mobilgerät 120 einen Standortsensor auf, insbesondere einen GPS-Sensor, mittels dessen eine Standortinformation des Mobilgeräts 120 ermittelt werden kann.

Denkbar ist, dass auf dem Mobilgerät 120 eine Software, insbesondere eine App ausgeführt wird, die zur Verwendung im Rahmen der Kommunikation zwischen der Materialverarbeitungseinrichtung 10 und dem Mobilgerät 120 ausgebildet ist.

Die Materialverarbeitungseinrichtung 10 kann eine Sende- und Empfangseinrichtung 110 aufweisen, die zum Senden und/oder Empfangen von Daten über die drahtlose Verbindung 140 ausgebildet ist. Die Sende- und Empfangseinrichtung 110 kann mit der Steuerungseinrichtung 100 der Materialverarbeitungseinrichtung 10 verbunden sein oder in diese integriert sein.

Wie aus Figur 1 weiter hervorgeht, kann vorzugsweise eine externe Datenverarbeitungseinrichtung 130 vorgesehen sein. Die externe Datenverarbeitungseinrichtung 130 kann eine Speichereinrichtung 130.1 aufweisen. Zwischen der externen Datenverarbeitungseinrichtung 130 und dem Mobilgerät 120 kann eine zweite drahtlose Verbindung 141 herstellbar sein. Ferner kann zwischen der externen Datenverarbeitungseinrichtung 130 und der Materialverarbeitungseinrichtung 10 eine dritte drahtlose Verbindung 142 herstellbar sein.

Bei der zweiten drahtlosen Verbindung 141 und der dritten drahtlosen Verbindung 142 kann es sich insbesondere um Funkverbindungen, vorzugsweise Mobilfunkverbindungen, beispielsweise GSM-, UMTS-, LTE-, 5G-, 6G-, und/oder WLAN-Verbindungen handeln.

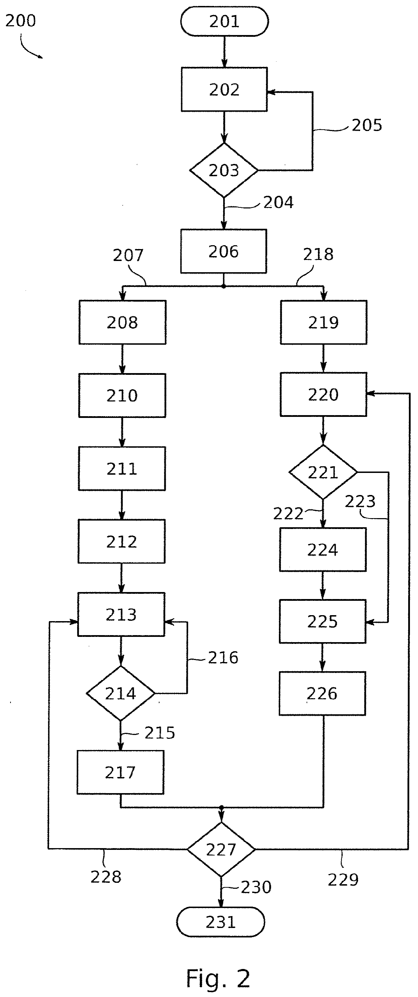

In Figur 2 ist ein beispielhafter Ablauf 200 einer Kommunikation zwischen der Materialverarbeitungseinrichtung 10 und dem Mobilgerät 120 dargestellt. Gemäß diesem Ablauf 200 besteht zu Beginn 201 noch keine drahtlose Verbindung 140 zwischen dem Mobilgerät 120 und der Materialverarbeitungseinrichtung 10. Ferner hat vorzugsweise zuvor noch keine drahtlose Verbindung 140 zwischen dem Mobilgerät 120 und der Materialverarbeitungseinrichtung 10 bestanden oder Verbindungsdaten einer vorherigen Verbindung wurden nicht gespeichert oder zwischenzeitlich gelöscht. Somit kann es sich um eine erstmalige Verbindung zwischen der Materialverarbeitungseinrichtung 10 und dem Mobilgerät 120 handeln.

In Schritt 202 wird nun eine drahtlose Verbindung 140 zwischen der Materialverarbeitungseinrichtung 10 und dem Mobilgerät 120 hergestellt. Hierbei befindet sich das Mobilgerät 120 vorzugsweise in der Nähe der Materialverarbeitungseinrichtung 10, insbesondere innerhalb einer Entfernung, die geringer ist als die Reichweite der drahtlosen Verbindung 140. Die Herstellung der Verbindung kann manuell erfolgen. Beispielsweise können die Verbindungsdaten, insbesondere eine Kennung der Materialverarbeitungseinrichtung 10 und/oder der drahtlosen Verbindung 140 und/oder ein Kennwort in das Mobilgerät 120 eingegeben werden. Denkbar ist auch, dass das Mobilgerät 120 automatisch eine drahtlose Verbindung 140 mit der Materialverarbeitungseinrichtung 10 initiiert, sobald die Reichweite der drahtlosen Verbindung 140 dies erlaubt, insbesondere sobald das Mobilgerät 120 ein drahtloses Netzwerk, insbesondere ein WLAN-Netzwerk der Materialverarbeitungseinrichtung 10 erkennt.

Es ist jedoch auch denkbar, dass Schritt 202 ein Abrufen einer gespeicherten Standortinformation der Materialverarbeitungseinrichtung 10 aus einem Speicher des Mobilgeräts 120 und/oder der Speichereinrichtung 130.1 der externen Datenverarbeitungseinrichtung 130 umfasst. Wenn auf Basis der gespeicherten Standortinformation der Materialverarbeitungseinrichtung 10 und der Standortinformation des Mobilgeräts ermittelt wird, dass eine drahtlose Verbindung 140 zwischen Mobilgerät 120 und Materialverarbeitungseinrichtung 10 verfügbar ist, kann diese hergestellt werden. Vorzugsweise kann die drahtlose Verbindung 140 automatisch hergestellt werden, wobei auch eine manuelle Herstellung denkbar ist, wie sie zuvor beschrieben wurde.

Wenn eine Prüfung 203 ergibt, dass die drahtlose Verbindung 140 in Schritt 202 nicht hergestellt wurde (Ergebnis der Prüfung "Nein" 205), kann Schritt 202 wiederholt werden. Ist das Ergebnis der Prüfung "Ja" 204, kann mit Schritt 206 fortgefahren werden.

In Schritt 206 werden die Verbindungsdaten gespeichert, vorzugsweise in einem Speicher des Mobilgeräts 120.

Der Ablauf 200 weist nun zwei Zweige 207 und 218 auf, die jeweils alternativ oder in Verbindung miteinander vorgesehen sein können. Zunächst wird der Ablauf gemäß Zweig 207 weiter beschrieben.

Die Materialverarbeitungseinrichtung 10 übermittelt gemäß Schritt 208 über die somit hergestellte drahtlose Verbindung 140 ihre aktuelle Standortinformation an das Mobilgerät 120. Alternativ kann das Mobilgerät 120 die aktuelle Standortinformation von der Materialverarbeitungseinrichtung 10 abrufen. Das Mobilgerät 120 speichert gemäß Schritt 210 die Standortinformation der Materialverarbeitungseinrichtung 10, vorzugsweise im Speicher des Mobilgeräts 120.

Schritt 210 kann ferner ein Abonnieren von aktualisierten Standortinformationen der Materialverarbeitungseinrichtung 10 durch das Mobilgerät 120 umfassen. Insbesondere kann hierzu vorgesehen sein, dass das Mobilgerät 120 über die zweite drahtlose Verbindung 141 der externen Datenverarbeitungseinrichtung 130 mitteilt, dass es mit der Materialverarbeitungseinrichtung 10 verbunden ist. Dann kann vorgesehen sein, dass die externe Datenverarbeitungseinrichtung 130 dem Mobilgerät 120 in Zukunft laufend aktualisierte Standortinformationen der Materialverarbeitungseinrichtung 10 übermittelt, insbesondere wenn diese sich seit einer vorherigen Verbindung geändert haben.

In Schritt 211 kann das Mobilgerät 120 die von der Materialverarbeitungseinrichtung 10 erhaltene aktuelle Standortinformation an die externe Datenverarbeitungseinrichtung 130 übermitteln. Diese Standortinformation wird durch die externe Datenverarbeitungseinrichtung 130, insbesondere in einer Speichereinrichtung 130.1 der externen Datenverarbeitungseinrichtung 130 gespeichert (Schritt 212), wobei vorzugsweise eine Kennung der Materialverarbeitungseinrichtung 10, insbesondere eine Seriennummer gemeinsam mit der Standortinformation hinterlegt wird.

Vorzugweise kann die Standortinformation der Materialverarbeitungseinrichtung 10 fortlaufend oder in regelmäßigen oder unregelmäßigen Intervallen geprüft werden (Schritt 213). Beispielsweise kann die Materialverarbeitungseinrichtung 10 dem Mobilgerät 120 fortlaufend oder in regelmäßigen oder unregelmäßigen Intervallen ihre aktuelle Standortinformation übermitteln.

Das Mobilgerät 120 kann dann eine Prüfung 214 durchführen, ob sich eine relevante Änderung gegenüber der im Speicher hinterlegten Standortinformation ergeben hat. Beispielsweise kann eine relevante Änderung darin liegen, dass sich der geografische Standort der Materialverarbeitungseinrichtung 10 um eine bestimmte Entfernung, beispielsweise um 20 m verändert hat. Ergibt die Prüfung keine relevante Änderung (Ergebnis der Prüfung "Nein" 216), kann die Aktualität der Standortinformation der Materialverarbeitungseinrichtung 10 weiterhin gemäß Schritt 213 fortlaufend ermittelt werden.

Ist das Ergebnis der Prüfung "Ja" 215, kann gemäß Schritt 217 die Standortinformation der Materialverarbeitungseinrichtung 10 lokal im Speicher des Mobilgeräts 120 aktualisiert werden und durch das Mobilgerät 120 über die zweite drahtlose Verbindung 141 zwecks Aktualisierung an die externe Datenverarbeitungseinrichtung 130 übermittelt werden.

Besteht die drahtlose Verbindung 140 zwischen dem Mobilgerät 120 und der Materialverarbeitungseinrichtung 10 weiterhin (Ergebnis der Prüfung 227 "Ja", Pfad 228), kann die Aktualität der Standortinformation der Materialverarbeitungseinrichtung 10 weiterhin gemäß Schritt 213 fortlaufend ermittelt werden. Besteht die drahtlose Verbindung 140 nicht mehr (Ergebnis der Prüfung 227 "Nein", Pfad 230), ist der beispielhafte Ablauf 200 beendet.

Im Folgenden wird nun der Ablauf 200 in Zweig 218 erläutert. Somit kann auf Schritt 206 der Schritt 219 folgen. Schritt 219 umfasst ein Abonnieren des Anlagenzustands und/oder Meldung betreffend den Anlagenzustand der Materialverarbeitungseinrichtung 10 durch das Mobilgerät 120. Insbesondere kann hierzu vorgesehen sein, dass das Mobilgerät 120 über die zweite drahtlose Verbindung 141 der externen Datenverarbeitungseinrichtung 130 mitteilt, dass es mit der Materialverarbeitungseinrichtung 10 verbunden ist. Dann kann vorgesehen sein, dass die externe Datenverarbeitungseinrichtung 130 dem Mobilgerät 120 in Zukunft Informationen bezüglich des Anlagenzustands der Materialverarbeitungseinrichtung 10 übermittelt.

In Schritt 220 kann ein Anlagenzustand der Materialverarbeitungseinrichtung 10 erfasst werden. Bei dem Anlagenzustand kann es sich um einen Messwert eines Sensors der Materialverarbeitungseinrichtung 10 handeln oder um einen Wert, der einen Messwert eines Sensors berücksichtigt. Beispielsweise kann es sich um einen Füllstand einer Halde 71.1, 74.1 handeln.

Darauf kann eine Prüfung 221 erfolgen, ob der Anlagenzustand einem Soll-Anlagenzustand entspricht oder von diesem abweicht. Beispielsweise kann ein Soll-Anlagenzustand einer maximalen Haldenhöhe entsprechen, ab der ein Abräumen der Halde 71.1, 74.1 innerhalb eines bestimmten Zeitraums, beispielsweise 20 Minuten, erfolgen muss. Als weiteres Beispiel kann es sich bei dem Soll-Anlagenzustand um eine maximale Füllhöhe innerhalb des Brechraums handeln. Ein von dem Füllstands-Sensor 61 ermittelter Wert kann beispielsweise hiermit verglichen werden. Der Soll-Anlagenzustand kann vorzugsweise auf dem Mobilgerät 120 hinterlegt sein. Der Abgleich kann somit durch das Mobilgerät 120 durchgeführt werden. Ein Vorteil kann hierbei sein, dass auf verschiedenen Mobilgeräten 120 unterschiedliche Soll-Anlagenzustände hinterlegt sein können. Beispielsweise kann für ein Mobilgerät 120, das sich räumlich näher an der Anlage befindet, ein höherer Wert für eine Soll-Haldenhöhe vorgesehen sein, da ein sich in der Nähe der Materialverarbeitungseinrichtung 10 befindlicher Nutzer einen Abräumauftrag in kürzerer Zeit, beispielsweise schon in 10 Minuten anstelle der oben genannten 20 Minuten ausführen kann.

Ergibt der Abgleich, dass keine relevante Abweichung vorliegt (Ergebnis der Prüfung 221 "Nein" 223), können der Anlagenzustand und die Standortinformation der Materialverarbeitungseinrichtung 10 durch das Mobilgerät 120 über die zweite drahtlose Verbindung 141 an die externe Datenverarbeitungseinrichtung 130 übermittelt werden (Schritt 225). Der Anlagenzustand kann somit ebenso wie die Standortinformation weiteren Mobilgeräten 120 zum Abruf oder zur Übermittlung durch die externe Datenverarbeitungseinrichtung 130 zur Verfügung stehen.

Ergibt der Abgleich hingegen eine relevante Abweichung, ergibt die Prüfung 221 das Ergebnis "Ja" 222. Dann kann mit Schritt 224 fortgefahren werden, gemäß dem eine Anzeige des Anlagenzustands und/oder der Meldung betreffend den Anlagenzustand an dem Mobilgerät 120 für den Nutzer erfolgt, insbesondere optisch, akustisch und/oder haptisch. Hierbei kann es sich insbesondere um eine Push-Mitteilung handeln, die den Benutzer über den Anlagenzustand informiert und/oder einen Handlungsbedarf seitens des Nutzers signalisiert.

Alternativ oder zusätzlich zum Abgleich durch das Mobilgerät 120 ist denkbar, dass der Abgleich zwischen dem Soll-Anlagenzustand und dem Anlagenzustand durch die Materialverarbeitungseinrichtung 10 vorgenommen wird, insbesondere ein Soll-Anlagenzustand in der Steuerungseinrichtung 100 der Materialverarbeitungseinrichtung 10 hinterlegt ist und mit einem Messwert oder einem davon abhängigen Wert verglichen wird. In diesem Fall kann es somit genügen, nicht den Anlagenzustand, sondern lediglich im Falle einer relevanten Abweichung vom Soll-Anlagenzustand eine Meldung betreffend den Anlagenzustand, insbesondere eine Warnmeldung an das Mobilgerät 120 zu übermitteln. Diese kann dann gemäß Schritt 224 dem Nutzer des Mobilgeräts 120 wiederum beispielsweise im Rahmen einer Push-Mitteilung zur Kenntnis gebracht werden.

Auch im Falle einer relevanten Abweichung (Ergebnis der Prüfung 221 "Ja" 222), kann der Anlagenzustand durch das Mobilgerät 120 gemäß Schritt 225 über die zweite drahtlose Verbindung 141 an die externe Datenverarbeitungseinrichtung 130 übermittelt werden.

Gemäß Schritt 226 können der Anlagenzustand, eine Kennung der Materialverarbeitungseinrichtung 10, insbesondere eine Seriennummer, sowie die Standortinformation der Materialverarbeitungseinrichtung 10 in der Speichereinrichtung 130.1 der externen Datenverarbeitungseinrichtung 130 gespeichert werden.

Auf Schritt 226 folgend kann nun wiederum das Bestehen der drahtlosen Verbindung 140 zwischen dem Mobilgerät 120 und der Materialverarbeitungseinrichtung 10 geprüft werden (Prüfung 227). Falls das Ergebnis der Prüfung "Ja" 229 ist, kann mit Schritt 220 fortgefahren werden. Besteht die drahtlose Verbindung 140 nicht mehr (Ergebnis der Prüfung 227 "Nein", Pfad 230), ist der beispielhafte Ablauf 200 beendet.

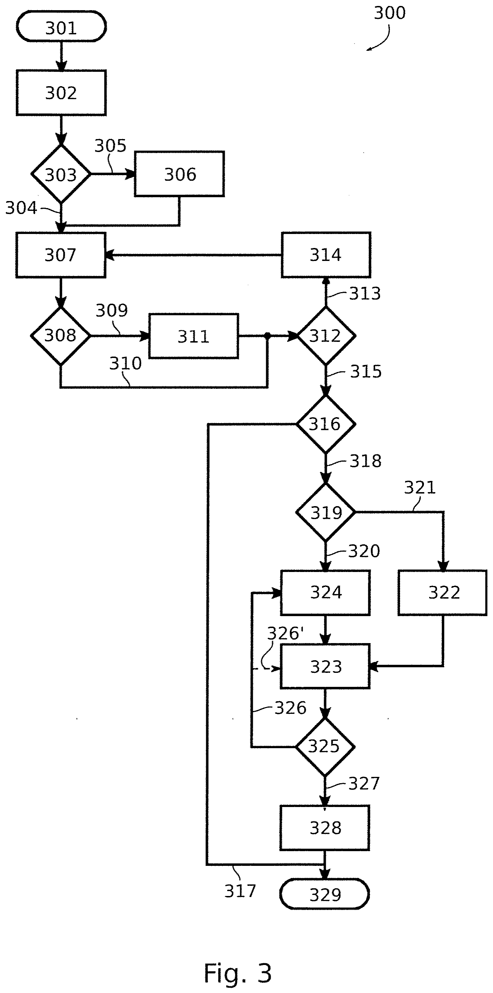

In Figur 3 ist ein beispielhafter Ablauf 300 einer Verbindung zwischen der Materialverarbeitungseinrichtung 10 und dem Mobilgerät 120 dargestellt. Gemäß diesem Ablauf besteht zu Beginn 301 noch keine drahtlose Verbindung 140 zwischen dem Mobilgerät 120 und der Materialverarbeitungseinrichtung 10. Es hat jedoch zuvor bereits eine drahtlose Verbindung 140 zwischen dem Mobilgerät 120 vorgelegen, insbesondere eine erstmalige Verbindung z.B. gemäß dem zuvor beschriebenen Ablauf 200, und/oder es liegt eine Standortinformation der Materialverarbeitungseinrichtung 10 in der Speichereinrichtung 130.1 der externen Datenverarbeitungseinrichtung 130 vor. Die Standortinformation kann der externen Datenverarbeitungseinrichtung 130 beispielsweise von dem Mobilgerät 120 während einer erstmaligen Verbindung gemäß dem obigen Beispiel (Ablauf 200), oder von einem anderen Mobilgerät 120, das zuvor mit der Materialverarbeitungseinrichtung 10 verbunden war, übermittelt worden sein.

In Schritt 302 kann das Mobilgerät 120 über die zweite drahtlose Verbindung 141 einen Abruf der Standortinformation der Materialverarbeitungseinrichtungen 10, mit denen es bereits zuvor verbunden war, von der externen Datenverarbeitungseinrichtung 130 initiieren. Gemäß Prüfung 303 kann dann geprüft werden, ob der Abruf erfolgreich war. Ist das Ergebnis der Prüfung "Nein" 305, kann das Mobilgerät 120, sofern im Speicher des Mobilgeräts bereits eine Standortinformation einer Materialverarbeitungseinrichtung 10 hinterlegt ist, auf diese zugreifen. Ist das Ergebnis der Prüfung "Ja" 304, können die Standortinformationen von der externen Datenverarbeitungseinrichtung 130 abgerufen und für den weiteren Ablauf verwendet werden.

Im nächsten Schritt 307 kann nun die Standortinformation des Mobilgeräts 120 mit den Standortinformationen der Materialverarbeitungseinrichtungen 10 verglichen werden. Der Abgleich kann vorzugsweise durch das Mobilgerät 120, insbesondere durch eine hierauf ausgeführte App, oder auch durch die externe Datenverarbeitungseinrichtung 130 vorgenommen werden. Beispielsweise kann ein geografischer Abstand zwischen einer jeweiligen Materialverarbeitungseinrichtung 10 und dem Mobilgerät 120 ermittelt werden.

Es kann nun eine Prüfung 308 vorgenommen werden, ob der Abstand zwischen der Materialverarbeitungseinrichtung 10 und dem Mobilgerät 120 einen bestimmten Wert unterschreitet. Der bestimmte Wert kann beispielsweise eine Reichweite der drahtlosen Verbindung 140 berücksichtigen. Beispielsweise kann der bestimmte Wert 200 m betragen. Ist das Ergebnis der Prüfung "Ja" 309, kann gemäß Schritt 311 in einem Zwischenspeicher des Mobilgeräts 120 vermerkt werden, dass jeweils die geprüfte Materialverarbeitungseinrichtung 10 sich in Reichweite befindet. Ist das Ergebnis der Prüfung "Nein" 310, kann Schritt 311 übersprungen werden.

Gemäß Prüfung 312 kann nun durch das Mobilgerät 120 überprüft werden, ob sich in dessen Speicher weitere Materialverarbeitungseinrichtungen 10, insbesondere deren Standortinformationen befinden. Sollte dies der Fall sein (Ergebnis der Prüfung "Ja" 313), kann in Schritt 314 die nächste bzw. eine weitere im Speicher des Mobilgeräts 120 hinterlegte Materialverarbeitungseinrichtung 10 geprüft werden, indem wiederum die Schritte bzw. Prüfungen 307 bis 311 durchgeführt werden.

Sind nun keine weiteren Materialverarbeitungseinrichtungen 10 im Speicher mehr vorhanden bzw. alle Materialverarbeitungseinrichtungen 10 gemäß den obigen Schritten geprüft worden, ergibt die Prüfung 312 das Ergebnis "Nein" 315.

Nun kann in Prüfung 316 ermittelt werden, ob das Mobilgerät 120 bereits mit einer Materialverarbeitungseinrichtung 10 über eine drahtlose Verbindung 140 verbunden ist. Ist das Ergebnis der Prüfung "Ja" 317, kann der Ablauf 300 beendet sein, sofern eine gleichzeitige drahtlose Verbindung 140 mit mehr als einer Materialverarbeitungseinrichtung 10 nicht vorgesehen ist.

Sofern eine drahtlose Verbindung 140 mit mehr als einer Materialverarbeitungseinrichtung 10 vorgesehen ist oder das Ergebnis der Prüfung 316 "Nein" 318 ist, kann in Prüfung 319 ermittelt werden, ob sich mehr als eine Materialverarbeitungseinrichtung 10 im Zwischenspeicher des Mobilgeräts 120 befindet, d.h. ob Schritt 311 (Vermerk von Materialverarbeitungseinrichtungen 10 in Reichweite) für mehr als eine Materialverarbeitungseinrichtung 10 durchlaufen worden ist. Ist das Ergebnis der Prüfung "Nein" 321, so befindet sich nur eine Materialverarbeitungseinrichtung 10 im Zwischenspeicher und gemäß Schritt 322 kann somit direkt die Herstellung der drahtlosen Verbindung 140 vorgeschlagen und/oder gemäß Schritt 323 gestartet werden. Denkbar ist eine automatische Verbindungsherstellung durch das Mobilgerät 120. Alternativ kann auch vorgesehen sein, dass das Mobilgerät 120 dem Nutzer die Verbindungsherstellung vorschlägt, und dieser diese noch bestätigen muss.

Befindet sich mehr als eine Materialverarbeitungseinrichtung 10 im Zwischenspeicher des Mobilgeräts 120, ergibt die Prüfung 319 das Ergebnis "Ja" 320. In diesem Fall kann gemäß Schritt 324 vorgesehen sein, dass das Mobilgerät 120 dem Nutzer eine manuelle Auswahl der in Reichweite befindlichen Materialverarbeitungseinrichtungen 10 zur Verbindungsherstellung ermöglicht. Hierbei kann vorzugsweise vorgesehen sein, dass diese nach dem Abstand zwischen dem Mobilgerät 120 und der jeweiligen Materialverarbeitungseinrichtung 10 sortiert aufgeführt werden. Es ist jedoch auch vorstellbar, dass automatisch eine drahtlose Verbindung 140 zu der nächstgelegenen Materialverarbeitungseinrichtung 10 hergestellt wird, insbesondere das Mobilgerät 120 automatisch die Verbindungsherstellung startet.

Nun kann geprüft werden 325, ob der Verbindungsaufbau erfolgreich war. Ist das Ergebnis der Prüfung "Nein" 326, so kann erneut Schritt 324. Alternativ kann Schritt 323 durchgeführt werden (Pfad 326'), um direkt einen erneuten Verbindungsversuch vorzunehmen, insbesondere wenn nur eine Materialverarbeitungseinrichtung 10 in Reichweite ermittelt wurde. Ist das Ergebnis der Prüfung "Ja" 327 kann in Schritt 328 die Standortinformation der über die drahtlose Verbindung 140 mit dem Mobilgerät 120 verbundenen Anlage im Speicher des Mobilgeräts 120 gespeichert bzw. aktualisiert werden. Auch kann das Mobilgerät 120 die Standortinformation an die externe Datenverarbeitungseinrichtung 130 zwecks Speicherung bzw. Aktualisierung über die zweite drahtlose Verbindung 141 übermitteln.

Schließlich kann der Ablauf beispielsweise durch Trennen der drahtlosen Verbindung 140 beendet werden 329.

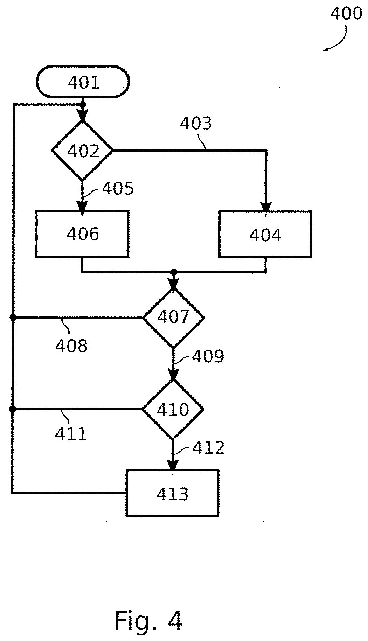

In Figur 4 ist ein beispielhafter Ablauf 400 einer Übermittlung eines Anlagenzustands oder einer Meldung betreffend den Anlagenzustand einer Materialverarbeitungseinrichtung 10 an ein Mobilgerät 120 dargestellt.

Nach Beginn 401 des Ablaufs 400 kann gemäß Prüfung 402 ermittelt werden, ob eine drahtlose Verbindung 140 zwischen dem Mobilgerät 120 und der Materialverarbeitungseinrichtung 10 besteht. Ist das Ergebnis der Prüfung "Ja" 403, kann gemäß Schritt 404 der Anlagenzustand und/oder die Meldung betreffend den Anlagenzustand direkt über die drahtlose Verbindung 140 an das Mobilgerät 120 übermittelt werden. Bei dem Anlagenzustand kann es sich um einen Messwert eines Sensors der Materialverarbeitungseinrichtung 10 handeln oder um einen Wert, der einen Messwert eines Sensors berücksichtigt. Beispielsweise kann es sich um einen Füllstand einer Halde 71.1, 74.1 handeln.

Darauf kann eine Prüfung 407 erfolgen, ob der Anlagenzustand einem Soll-Anlagenzustand entspricht oder von diesem abweicht. Beispielsweise kann ein Soll-Anlagenzustand einer maximalen Haldenhöhe entsprechen, ab der ein Abräumen der Halde 71.1, 74.1 innerhalb eines bestimmten Zeitraums, beispielsweise 20 Minuten, erfolgen muss. Als weiteres Beispiel kann es sich bei dem Soll-Anlagenzustand um eine maximale Füllhöhe innerhalb des Brechraums handeln. Ein von dem Füllstands-Sensor 61 ermittelter Wert kann beispielsweise hiermit verglichen werden. Der Soll-Anlagenzustand kann vorzugsweise auf dem Mobilgerät 120 hinterlegt sein. Der Abgleich kann somit durch das Mobilgerät 120 durchgeführt werden.

Ergibt der Abgleich eine relevante Abweichung, führt die Prüfung 407 zu dem Ergebnis "Ja" 409. Im zuvor beschriebenen Fall, dass eine drahtlose Verbindung 140 zwischen dem Mobilgerät 120 und der Materialverarbeitungseinrichtung 10 vorliegt (Ergebnis der Prüfung 402 "Ja" 403), kann eine Prüfung 410, ob sich die Materialverarbeitungseinrichtung 10 innerhalb eines vorgegebenen Abstands zu dem Mobilgerät 120 befindet, beispielsweise weniger als 1 km, als 500 m, als 200 m oder weniger, entfallen. Hierbei kann angenommen werden, dass die Reichweite der drahtlosen Verbindung 140 ohnehin geringer ist als ein derartiger vorgegebener Abstand. Demnach werden der Anlagenzustand und/oder die Meldung betreffend den Anlagenzustand für den jeweiligen Nutzer des Mobilgeräts 120 in der Regel relevant sein.

Insofern kann mit Schritt 413 fortgefahren werden, gemäß dem eine Anzeige des Anlagenzustands und/oder der Meldung betreffend den Anlagenzustand an dem Mobilgerät 120 für den Nutzer erfolgt, insbesondere optisch, akustisch und/oder haptisch. Hierbei kann es sich insbesondere um eine Push-Mitteilung handeln, die den Benutzer über den Anlagenzustand informiert und/oder einen Handlungsbedarf seitens des Nutzers signalisiert.

Alternativ oder zusätzlich zum Abgleich durch das Mobilgerät 120 ist denkbar, dass der Abgleich zwischen dem Soll-Anlagenzustand und dem Anlagenzustand durch die Materialverarbeitungseinrichtung 10 vorgenommen wird, insbesondere ein Soll-Anlagenzustand in der Steuerungseinrichtung 100 der Materialverarbeitungseinrichtung 10 hinterlegt ist und mit einem Messwert verglichen wird. In diesem Fall kann es somit genügen, nicht den Anlagenzustand, sondern lediglich im Falle einer relevanten Abweichung vom Soll-Anlagenzustand eine Meldung betreffend den Anlagenzustand, insbesondere eine Warnmeldung an das Mobilgerät 120 zu übermitteln. Diese kann dann gemäß Schritt 413 dem Nutzer des Mobilgeräts 120 wiederum beispielsweise im Rahmen einer Push-Mitteilung zur Kenntnis gebracht werden.

Ergibt die Prüfung 407 das Ergebnis "Nein" 408, kann wieder mit Prüfung 402 fortgefahren werden.

Ergibt nach Beginn 401 des Ablaufs 400 hingegen die Prüfung 402, dass keine drahtlose Verbindung 140 zwischen dem Mobilgerät 120 und der Materialverarbeitungseinrichtung 10 besteht (Ergebnis der Prüfung 402 "Nein" 405), kann gemäß Schritt 406 der Anlagenzustand und/oder eine Meldung betreffend den Anlagenzustand und/oder der Standort der jeweiligen Materialverarbeitungseinrichtung 10 durch das Mobilgerät 120 von der externen Datenverarbeitungseinrichtung 130 abgerufen werden. Der Anlagenzustand und/oder die Meldung betreffend den Anlagenzustand kann beispielsweise durch ein anderes Mobilgerät 120, das mittels einer drahtlosen Verbindung 140 mit der Materialverarbeitungseinrichtung 10 verbunden ist, an die externe Datenverarbeitungseinrichtung 130 übermittelt worden sein. Denkbar ist auch, dass die Materialverarbeitungseinrichtung 10 den Anlagenzustand und/oder die Meldung betreffend den Anlagenzustand über eine dritte drahtlose Verbindung 142 an die externe Datenverarbeitungseinrichtung 130 übermittelt hat.

Daraufhin kann wiederum Prüfung 407 durchlaufen werden. Hier kann der Abgleich zwischen Anlagenzustand und Soll-Anlagenzustand auch durch die externe Datenverarbeitungseinrichtung 130 durchgeführt werden. Denkbar ist auch ein Abgleich, wie zuvor beschrieben, durch das Mobilgerät 120 und/oder die Materialverarbeitungseinrichtung 10.

Da das Mobilgerät 120 im vorliegenden Fall nun nicht mittels der drahtlosen Verbindung 140 mit der Materialverarbeitungseinrichtung 10 verbunden ist, kann gemäß Prüfung 410 festgestellt werden, ob sich die Materialverarbeitungseinrichtung 10 innerhalb eines vorgegebenen Abstands zu dem Mobilgerät 120 befindet, beispielsweise weniger als 1 km, als 500 m, als 200 m oder weniger. Wenn der Abstand geringer ist als der vorgegebene Wert, kann die Meldung für den Nutzer des Mobilgeräts 120 beispielsweise von Relevanz sein. Ergibt die Prüfung 410 somit das Ergebnis "Ja" 412, kann mit Schritt 413 fortgefahren werden, gemäß dem eine Anzeige des Anlagenzustands und/oder der Meldung betreffend den Anlagenzustand an dem Mobilgerät 120 für den Nutzer erfolgt, insbesondere optisch, akustisch und/oder haptisch. Hierbei kann es sich insbesondere um eine Push-Mitteilung handeln, die den Benutzer über den Anlagenzustand informiert und/oder einen Handlungsbedarf seitens des Nutzers signalisiert.

Ergibt die Prüfung 410 das Ergebnis "Nein" 411, kann wieder mit Prüfung 402 fortgefahren werden.

Der Vorgang 400 kann beispielsweise in regelmäßigen Zeitabständen, in unregelmäßigen Zeitabständen oder fortlaufend, beispielsweise als Endlosschleife für alle Materialverarbeitungseinrichtungen 10, mit denen das Mobilgerät 120 bereits verbunden ist/war und/oder die dem Mobilgerät 120 bereits bekannt sind, durchlaufen werden. Insbesondere kann der Vorgang 400 durchlaufen werden, solange die Software, insbesondere App auf dem Mobilgerät 120 ausgeführt wird.

Vorzugsweise ist das Mobilgerät 120 softwaremäßig, insbesondere durch eine darauf ausführbare Software, beispielsweise eine App, dazu ausgebildet, zumindest die Schritte bzw. Prüfungen 208, 210, 211, 213, 214, 217, 227, 219, 224, 225, 302 bis 328, 402, 404 und/oder 406 und gegebenenfalls 202, 203, 206, 221, 402, 407, 410 und/oder 413 durchzuführen.

Die externe Datenverarbeitungseinrichtung 130 kann vorzugsweise eine Software aufweisen, die dazu ausgebildet ist, zumindest die Schritte bzw. Prüfungen 212 und/oder 226 und gegebenenfalls 221, 407 und/oder 410 durchzuführen.

Vorzugsweise ist die Materialverarbeitungseinrichtung 10 softwaremäßig, insbesondere durch Software, die insbesondere durch die Steuerungseinrichtung 100 ausführbar ist, dazu ausgebildet, zumindest die Schritte bzw. Prüfungen 220 und/oder gegebenenfalls 211, 221, 404, und/oder 407 durchzuführen.

## Patentansprüche

1. Verfahren zur Kommunikation zwischen einer Materialverarbeitungseinrichtung (10) und einem Mobilgerät (120), umfassend:
- Abrufen einer gespeicherten Standortinformation der Materialverarbeitungseinrichtung (10) aus einem Speicher des Mobilgeräts (120) und/oder einer Speichereinrichtung (130.1) einer externen Datenverarbeitungseinrichtung (130)
- Ermittlung einer Standortinformation des Mobilgeräts (120)
- Ermittlung der Verfügbarkeit einer drahtlosen Verbindung (140) zwischen dem Mobilgerät (120) und der Materialverarbeitungseinrichtung (10) zumindest teilweise auf Basis der gespeicherten Standortinformationen des Mobilgeräts (120) und der Materialverarbeitungseinrichtung (10)
- Herstellen der drahtlosen Verbindung (140) bei gegebener Verfügbarkeit.

2. Verfahren nach Anspruch 1, **dadurch gekennzeichnet,**
- **dass** nach Herstellung der drahtlosen Verbindung (140) eine aktuelle Standortinformation der Materialverarbeitungseinrichtung (10) über die drahtlose Verbindung (140) an das Mobilgerät (120) übermittelt wird, und
- vorzugsweise in einem Speicher des Mobilgeräts (120) gespeichert wird.

3. Verfahren nach Anspruch 2, **dadurch gekennzeichnet,**
**dass** die aktuelle Standortinformation der Materialverarbeitungseinrichtung (10) von dem Mobilgerät (120)
- über eine zweite drahtlose Verbindung (141) an eine externe Datenverarbeitungseinrichtung (130) übermittelt wird, und
- in einer Speichereinrichtung (130.1) der externen Datenverarbeitungseinrichtung (130) gespeichert wird.

4. Verfahren nach einem der Ansprüche 1 bis 3, **dadurch gekennzeichnet,**
**dass** die/eine aktuelle Standortinformation der Materialverarbeitungseinrichtung (10) von der Materialverarbeitungseinrichtung (10)
- über eine dritte drahtlose Verbindung (142) an die/eine externe Datenverarbeitungseinrichtung (130) übermittelt wird, und
- in der/einer Speichereinrichtung (130.1) der externen Datenverarbeitungseinrichtung (130) gespeichert wird.

5. Verfahren nach einem der Ansprüche 1 bis 4, **dadurch gekennzeichnet,**
**dass** die Materialverarbeitungseinrichtung (10) ihre aktuelle Standortinformation ermittelt, insbesondere mittels eines Standortsensors der Materialverarbeitungseinrichtung (10), wobei die Standortermittlung vorzugsweise mittels eines globalen Navigationssatellitensystems, insbesondere mittels GPS erfolgt, und/oder
**dass** die Ermittlung der Standortinformation des Mobilgeräts (120) durch das Mobilgerät (120) vorgenommen wird, insbesondere mittels eines Standortsensors des Mobilgeräts (120), wobei die Standortermittlung vorzugsweise mittels eines globalen Navigationssatellitensystems, insbesondere mittels GPS erfolgt.

6. Verfahren nach einem der Ansprüche 1 bis 5, **dadurch gekennzeichnet,**
**dass** die gespeicherte Standortinformation der Materialverarbeitungseinrichtung (10) von dem Mobilgerät (120)
- über die/eine zweite drahtlose Verbindung (141) von der externen Datenverarbeitungseinrichtung (130) abgerufen wird, insbesondere aus der Speichereinrichtung (130.1) abgerufen wird.

7. Verfahren nach einem der Ansprüche 1 bis 6, **dadurch gekennzeichnet,**
**dass** die Ermittlung der Verfügbarkeit einer drahtlosen Verbindung (140) zwischen dem Mobilgerät (120) und der Materialverarbeitungseinrichtung (10) einen geografischen Abstand zwischen dem Mobilgerät (120) und der Materialverarbeitungseinrichtung (10) berücksichtigt.

8. Verfahren zur Übermittlung eines Anlagenzustands und/oder einer Meldung betreffend einen Anlagenzustand einer Materialverarbeitungseinrichtung 10 an ein Mobilgerät 120,
umfassend:
- Ermittlung des Anlagenzustands der Materialverarbeitungseinrichtung (10),
- Übermittlung des Anlagenzustands und/oder einer der Meldung betreffend den Anlagenzustand an das Mobilgerät (120) bei einer bestehenden drahtlosen Verbindung (140) zwischen der Materialverarbeitungseinrichtung (10) und dem Mobilgerät (120) über die drahtlose Verbindung (140), und/oder
- Übermittlung des Anlagenzustands und/oder der Meldung betreffend den Anlagenzustand an eine externe Datenverarbeitungseinrichtung (130).

9. Verfahren nach Anspruch 8, **dadurch gekennzeichnet,**
**dass** der Anlagenzustand einen Messwert zumindest eines Sensors der Materialverarbeitungseinrichtung (10) umfasst oder von dem Messwert abhängt, wobei der zumindest eine Sensor insbesondere einen
- Haldensensor (94, 96) zur Ermittlung eines Materialstands einer Halde für durch die Materialverarbeitungseinrichtung (10) zu verarbeitendes und/oder verarbeitetes Material, und/oder einen
- Fördereinrichtungs-Sensor (82) zur Ermittlung eines an der Materialverarbeitungseinrichtung (10) geförderten Stroms zu verarbeitenden Materials, und/oder einen
- Austragsband-Sensor (90) zur Ermittlung eines an der Materialverarbeitungseinrichtung 10 geförderten Stroms verarbeiteten Materials, und/oder einen
- Aufgabematerial-Sensor (80) zur Ermittlung einer Information über einer Aufgabeeinheit (20) zugeführtes zu verarbeitendes Material, und/oder einen
- Überlastsensor (60), und/oder einen
- Füllstands-Sensor (61) zur Ermittlung eines Füllstands einer Brechanlage (50) und/oder Siebanlage (30) der Materialverarbeitungseinrichtung (10), und/oder einen
- Brechspalt-Sensor (88) zur Ermittlung einer aktuellen Spaltbreite eines Brechspalts (56) der/einer Brechanlage (50), und/oder
- einen Betriebsstoff-Sensor zur Ermittlung eines Vorrats an Betriebsstoffen, und/oder
- einen Ladezustands-Sensor zur Ermittlung eines Ladezustands eines Energiespeichers umfasst.

10. Verfahren nach Anspruch 8 oder 9, **dadurch gekennzeichnet,**
**dass** auf Basis einer Standortinformationen der Materialverarbeitungseinrichtung (10) und einer Standortinformation des Mobilgeräts (120) ein geografischer Abstand zwischen der Materialverarbeitungseinrichtung (10) und dem Mobilgerät (120) ermittelt wird,
und **dass** der Anlagenzustand und/oder die Meldung betreffend den Anlagenzustand über eine zweite drahtlose Verbindung (141) von der externen Datenverarbeitungseinrichtung (130) an das Mobilgerät (120) übermittelt wird, wenn der geografische Abstand einen festgelegten Wert unterschreitet.

11. Verfahren nach einem der Ansprüche 8 bis 10, **dadurch gekennzeichnet,**
**dass** der Anlagenzustand mit einem Soll-Anlagenzustand verglichen wird, und dass die Meldung betreffend den Anlagenzustand eine Warnmeldung ist, die eine Abweichung zwischen dem Anlagenzustand und dem Soll-Anlagenzustand signalisiert.

12. Verfahren nach einem der Ansprüche 8 bis 11, **dadurch gekennzeichnet,**
**dass** die Ermittlung des Anlagenzustands, die Übermittlung des Anlagenzustands und/oder der Meldung betreffend den Anlagenzustand an das Mobilgerät (120) und/oder an die externe Datenverarbeitungseinrichtung (130) kontinuierlich, in regelmäßigen Abständen oder in unregelmäßigen Abständen erfolgt.

13. Verfahren nach einem der Ansprüche 1 bis 7, **dadurch gekennzeichnet,**
**dass** es ein Verfahren nach einem der Ansprüche 8 bis 12 umfasst.

14. Verfahren nach einem der Ansprüche 1 bis 13, **dadurch gekennzeichnet,**
**dass** die Materialverarbeitungseinrichtung (10) eine Gesteinsverarbeitungseinrichtung ist und zumindest eine Brechanlage (50), eine Siebanlage (30) und/oder ein Haldenband aufweist, und/oder dass das Mobilgerät (120) ein Mobiltelefon, ein Tablet-Computer, ein Personal Digital Assistant (PDA) und/oder ein Notebook ist.

15. Verfahren nach einem der Ansprüche 1 bis 14, **dadurch gekennzeichnet, dass** die drahtlose Verbindung (140) zwischen der Materialverarbeitungseinrichtung (10) und dem Mobilgerät (120) eine Funkverbindung, insbesondere eine WLAN- und/oder Bluetooth- und/oder NFC- und/oder RFID- Verbindung,
und/oder dass die zweite drahtlose Verbindung (141) zwischen dem Mobilgerät (120) und der externen Datenverarbeitungseinrichtung (130) eine Funkverbindung, insbesondere eine Mobilfunkverbindung, vorzugsweise eine GSM-, UMTS-, LTE-, 5G-, eine 6G-Verbindung, und/oder eine WLAN-Verbindung,
und/oder dass die dritte drahtlose Verbindung (142) zwischen der Materialverarbeitungseinrichtung (10) und der externen Datenverarbeitungseinrichtung (130) eine Funkverbindung, insbesondere eine Mobilfunkverbindung, vorzugsweise eine GSM-, UMTS-, LTE-, 5G-, eine 6G-Verbindung, und/oder eine WLAN-Verbindung umfasst.
